# EUROPEAN PATENT APPLICATION

(11) **EP 3 142 166 A1**
(43) Date of publication of application: **15.03.2017**
(21) Application number: 15184792.8
(22) Date of filing: 11.09.2015
(51) Int. Cl.: H01M 2/10, H01M 10/6555

(54) **A COMPRESSIBLE COMPOSITE MATERIAL USEFUL IN PARTICULAR AS A CONSTRUCTION MATERIAL FOR BATTERIES**

(71) Applicant: Von Roll Schweiz AG, 4226 Breitenbach (CH)
(72) Inventor: The designation of the inventor has not yet been filed
(74) Representative: Bohest AG

(57) **Abstract**

Disclosed is a compressible composite material in form of a layered assembly of substantially rigid plates and compressible layers, which are alternately piled in direction vertical to their largest surface comprising
n of said rigid plates (a₁), (a₂),....(a₍ₙ₋₁₎ and (aₙ) having a substantially identical largest surface area and comprising a ceramic material having a thermal conductivity of less than about 35 W/mK at 25°C and a thermally resistant resin as binder; and
(n-1) of said compressible layers which are located between two adjacent ones of said plates (a₁) to (aₙ) and comprising an elastic ceramic or refractory fiber mat, which is cemented to said adjacent plates by virtue of a thermally resistant resin and fill the space between said adjacent plates in a way which enables said fiber mat to maintain a permanent interstice between two adjacent plates (a₁) and (a₂), (a₂) and (a₃),......and (a₍ₙ₋₁₎ and aₙ,
wherein n represents an integer of 2 or more than 2,
which is useful as thermal barrier material for the construction of battery housings, in particular lithium-ion battery houses, to prevent the propagation of damage in- and/or outside oft he battery caused by an overheating of one or more of the battery cells (thermal runaway).

## Description

The present invention relates to a compressible composite material useful in particular as a construction material for building reloadable batteries comprising a plurality of single reloadable battery cells or battery cell packs, in particular corresponding lithium-ion batteries.

Batteries comprising a number of reloadable single battery cells like in particular reloadable lithium-ion batteries are known and used in several fields of technique, including e.g. as electric power supply of mobile phones, portable computers like laptop or table computers and in particular as the electric power supply of electric cars or vehicles or hybride cars.

It is also known that particularly rechargable battery cells, such as lithium-ion cells, sometimes undergo internal overheating caused by events such as short circuits within the cell, improper cell use, manufacturing defects or exposure to extreme external temperature, which overheating can lead to a so-called thermal runaway when the reaction rate within the cell caused by the high temperature increases to a point where more heat is generated within the cell than can be withdrawn and the generated heat leads to a further increase of the reaction rate and in turn of the generated heat. In lithium-ion batteries for example, the heat generated within such defective cells can reach 500 °C to 1000°C, in localized hot spots even more.

In particular, it is essential in such cases to interrupt or at least reduce a heat transfer from defective cells or cell packs in the battery to other cells or cell packs which are still working correctly, because the heat generated in a defective battery cell or cell pack can spread out to the neighbouring cells, which in turn can also overheat and then undergo thermal runaway leading to an overheating and thermal runaway of further battery cells or battery packs of the battery and so on, what can result in an extensive damage of the battery pack or battery, and sometimes even of the device containing the battery, e.g. by ignition, combustion and sometimes explosion if too much gaseous reactants are generated within the cells.

It is accordingly usual to provide safety precautions for protecting the environment of overheated battery cells or packs of battery cells against the generated heat, including in particular not yet affected battery cells or packs but also surrounding construction elements of a device or apparatus containing the battery.

For this purpose, it has e.g. been suggested to insert thermally insulating barrier elements inside of a battery in order to prevent or reduce the heat transfer from an overheated battery cell or pack of battery cells to other or battery cells or cell packs of a battery and/or to the environment of the battery.

This is for example described in US 2006/0164795 or US 8,541,126. According to these prior art documents, the thermal barrier elements can e.g. consist of a ceramic material such as aluminum oxide, magnesium oxide, silicon dioxide, calcium silicates, calcium magnesium silicates or alumina silicates, which materials provide high melting temperatures of about 500°C to about 1500°C and more, i.e. well above the temperatures normally achieved even short time during a thermal runaway event in a battery, combined with a relatively low thermal conductivity, such as a thermal conductivity of less than 50 W/mK (measured at 25°C), preferably less than 10 W/mK or even less than 1 W/mK. Such ceramic elements can e.g. consist of plates produced by compressing a number of laminates of said ceramic materials impregnated with a resin of suitable temperature resistance as disclosed in US 2006/0164795.

Although the use of the described barrier elements based on ceramic materials can reduce the risk of propagating runaway events in batteries including lithium-ion batteries, the known barrier elements do not yet fulfill all requirements for a failure-free long-term operation and still need improvement, in particular in respect of their dimensional adaptability, for example vis-à-vis the thermal expansion of the battery cells or battery cell packs surrounded by such barrier elements during operation or a potential increase of the gas pressure inside an compartment of the battery housing surrounded by such prior art barrier elements and containing the defective battery cells or packs caused by the release of gases from one or more of the defective battery cells as a consequence of the per se desired disruption of a safety vent of a battery cell caused by a thermal runaway event involving said cell. Furthermore, the known barrier elements can still be improved in respect of their thermal resistance and can still be reduced in weight without reducing the thermal resistance. Furthermore, they should permit more flexiblibility concerning possible tolerances in the size of other construction elements or parts of the batteries for which they shall be used. Subject of the present invention is therefore a compressible composite material in form of a layered assembly of substantially rigid plates and compressible layers, which are alternately piled in direction vertical to their largest surface and comprise n of said rigid plates (a₁), (a₂),....(a(ₙ₋₁) and (aₙ) having a substantially identical largest surface area and comprising a ceramic material having a thermal conductivity of less than about 35 W/mK at 25°C and a thermally resistant resin as binder; and

(n-1) of said compressible layers which are located between two adjacent ones of said plates (a₁) to (aₙ) and comprise an elastic ceramic or refractory fiber mat, which is cemented to the adjacent rigid plates by virtue of a thermally resistant resin and fill the space between said adjacent plates in a way which enables said fiber mat to maintain a permanent interstice between two adjacent plates (a₁) and (a₂), (a₂) and (a₃),......and (a₍ₙ₋₁₎ and aₙ,
wherein n represents an integer of 2 or more than 2.

The term "substantially rigid plate" refers to an object of sheetlike nature, the thickness of which cannot be reduced by external force under conditions under which the plate is intended to be used, in particular at pressures up to 10 atm and temperatures at which the binder present in said plates does not decompose, i.e temperatures from about minus 50 to about 750°C.

The term "compressible" in connection with a fiber mat refers to a mat which can be compressed to about 10 to 90 percent of its thickness in uncompressed state i.e. when no forces act on the fiber mats , preferably to about 25 to 75 percent, e.g. to about 30 percent. The compression of the material is preferably reversible, at least in part.

The mentioned rigid plates comprise a ceramic material having a thermal conductivity of less than about 35 W/mK at 25°C and a thermally resistant resin as binder. More preferably, the creamic material comprised in the rigid plates has a thermal conductivity of less than about 10 W/mK at 25°C, more particularly less than about 3 W/mK at 25°C, e.g. less than 1 W/mK at 25°C.

The melting point of the ceramic material is generally about 500°C to 2000°C, more preferably about 700 to 1200°C or more.

The ceramic material is preferably selected from materials such as aluminum oxide, magnesium oxide, silicon dioxide, calcium silicates, calcium magnesium silicates, alumina silicates and mixtures thereof.

The rigid plates generally comprise about 75% by weight or more, more preferably 80% or more, based on the weight of the plate of ceramic material, preferably about 85% to about 95% by weight.

The thermally resistant binder comprised in the rigid plates of the composite material according to the invention is preferably a silicone resin, i.e. a resin based on repeating units of the following idealized formula : 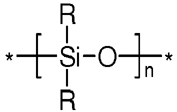 wherein R represent hydrogen; an organic substituent selected e.g. from C₁-C₄alkyl, vinyl and phenyl; or mixtures thereof. In reality, silicone resins comprise dependent on their degree of crosslinking a mixture of repeating units selected from SiO_{4/2} ; RSiO_{3/2} ; R₂SiO_{2/2} and R₃SiO_{1/2}, which are usually referred to as Q, T, D and M units, respectively and are combined in various manner to form cyclic, branched or linear structures. The most frequently used silicone resins are substantially built from D and T units (DT resins) or from M and Q units (MQ resins) but other combinations are also used like e.g. MTQ or QDT resins.

The average molecular weights of silicone resins suitable for the present invention range e.g. from about 500 to about 7500 g/mol, preferably from about 1000 to about 5000 g/mol, more preferably from about 1000 to 3000 g/mole and can e.g. be determined by gel permeation chromatography techniques (GPC).

Preferred silicone resins for the present invention are MQ resins, preferably consisting of 80 mole% or, more preferably, 90 mole% or more, in particular 95 to 100 mole% of M and Q units as defined above and wherein the molar ratio of M to Q units is more preferably between 0.5 : 1 and 1.5 : 1. Resins of this kind can be e.g. be prepared by co-hydrolysis of tetraalkoxysilanes (Q-units) with trimethylalkoxysilanes (M-units) and represent a threedimensional network of polysilicic acid terminated with trimethylsilyl groups and a few alkoxy and/or hydroxy groups still being present in the molecules. Resins of this kind are in more detail e.g. described in WO2013/119561 which is incorproated in its entirety into this description. Preferred commerial MQ resins include those listed in paragraph [0021] of WO2013/119561, in particular Silres^{®} MK methyl silicone resin. Silres^{®} MK methyl silicone resin contains about 82% SiO₂ based on resin solids and is a so-called preceramic polymer which is permanently stable up to about 300°C to 350°C and undergoes oxidative degradation to ceramic silica at higher temperatures, thus substantially maintaining the inner bonding of the material forming the rigid plates and their mechanical and thermal properties even after exposure to temperature substantially exceeding 350°C.

Particularly preferred as the ceramic material of the rigid plates are sheet silicates, in particular of the mica group having the general formula IM₂₋₃ T₄O₁₀(X,OH)₂, wherein, I corresponds in particular to K, Na, Ca and mixtures thereof; M corresponds to Al, Mg, Fe, Li and mixtures of two thereof, and T is normally Si or Al but may also be Ti for example and X represents Fluor or OH. Particularly preferred are Muscovite, i.e. KAl₂T₄O₁₀(F,OH)₂, wherein T₄ represents preferably AlSi₃; and in particular Phlogopite, i.e. KMg₃T₄O₁₀(F,OH)₂, wherein T₄ represents preferably again AlSi₃, which have generally a thermal conductivity of about 0.1 to 1 W/mK at 25°C, for excample 0.3 to 0.8 W/mK at 25°C (Muscovite) or about 0.4 W/mK at 25°C (Phlogopite). Mica has a melting point of about 700 to 1000°C.

The rigid mica plates can e.g. advantageously be prepared by impregnating several layers of usual mica paper with a suitable silicone resin like those mentioned and compressing the assembly to form the rigid mica plate.

Rigid mica plates suitable for the composite material according to the present invention have preferably a mica content of about 85% or more, preferably about 90% or more, based on the weight of the rigid plate. Numerous suitable mica plates are commercially available. As examples are mentioned e.g. the laminates marketed by vonRoll under the registered trademark vonRoll^{®} Shield T EV18 based on muscovite mica paper as reinforcement and a silicone resin as matrix material and having a mica content of more than 90% by weight and a short time maximum heat resistance of 900°C or vonRoll^{®} ShieldT EV28 based on phlogopite mica paper as reinforcement and a silicone resin as matrix material and having a mica content of more than 90% by weight and a short time maximum heat resistance of 900°C. The flammability of the rigid mica plates is preferably class V-0 according to UL94. The aforementioned types of rigid mica plates are, of course, merely exemplary and a skilled person can choose others as long as they provide a composite material with properties as described herein.

The compressible layers located between two adjacent rigid plates of the composite material according to the invention comprise elastic and compressible mats made from ceramic or refractory fibers, i.e. an inorganic material of a length to diameter ratio of at least 100 to 1, preferably at least 500 to 1, e.g. 1000 to 1 or more. The thickness of suitable fibers is preferably between 5 and 250µm, more preferably between 10 and 150µm The fibers have generally polycrystalline or amorphous microstructure.

The ceramic/refractory fibers may e.g. consist of alumina, zirconia, silica, glas, alumina silicates such as mullite, which can also be used in admixture to form the compressible mats.

The fibers can preferably withstand permanent temperatures of about 800 to 1400°C, more preferably of about 1000 to 1350°C.

The mats can be a non-woven material made from said fibers like a ceramic wool, felt or paper or a woven fabric of said fibers. The mats can also comprise mixtures of woven and non-woven forms of ceramic fibers. Non-woven mats are normally preferred. The mats as such are preferably free of binders or other organic material.

The compressible inorganic fiber mats can preferably be compressed to about 80%, more preferably to about 65%, still more preferably to about 50%, most preferably to about 30 percent of their thickness in uncompressed state.

The compressible mats suitable for the present invention have generally a thermal conductivity of less than about 1 W/mK measured at temperatures up to 1200°C and , more preferably less than about 0.5 W/mK, in particular less than 0.35 W/mK at such temperatures.

Suitable mats are commercially available, e.g. the ceramic mats type MT - 1260 and MT - 1430, elastic stitched mats exhibiting a thermal conductivity of less than about 0.35 W/mK measured at temperatures up to 1200°C produced of all kinds of aluminosilicate fibres without the addition of organic binders available from Europolit^{®} or Fibermax® mats available from Unifrax, which are lightweight, high-temperature resistant (up to about 1650°C), flexible and resilient mat products exhibiting a thermal conductivity of less than about 0.42 W/mK measured at temperatures up to 1000°C, composed entirely of Fibermax® polycrystalline mullite fibers and free of organic binders or other additives which could cause outgassing fumes or associated problems. Suitable is also ceramic fiber paper, available e.g. from KT Refractories made from fibers consisting of aluminosilicate and having an organic content of less than 10% and a maximum operation temperature of about 950 to 1200°C. The aforementioned fiber mat types are, of course, merely exemplary and a skilled person can choose others as long as they provide a composite material with properties as described herein.

Although not preferred, it would also be within the scope of the present invention when one or more interrmediate layers between rigid plates of a composite material according to the invention comprise a double or even multiple assembly of fiber mats mounted one on the other before the next rigid plate follows.

The rigid plates of the compressible composite material according to the invention and the interjacent compressible inorganic fiber mats or, in case of a composite structure as described in the previous paragraph, two adjacent fiber mats of the intermediate layer are preferably stuck together with a thermally resistant silicone adhesive, preferably based on a silicone resin as described above. The silicone adhesive is preferably a single component silicone adhesive. Such single component silicone adhesives require a humidity of about 5% to 95% and a temperature of about 5 to 40°C to cure. Complete curing depends on the thickness of the adhesive film and can take several days. For an adhesive film thickness of a few millimeters the adhesive generally fully cures within 24 hours.

The compressible inorganic fiber mats can cover the entire surface of the rigid plates between which they are located. This is not necessary however and the inorganic fiber mats can as well cover the surface of the adjacent rigid plates only partially as long as a permanent interstice is maintained between these rigid plates. The remaining volume of the compressible layers is in contact with the environment and thus filled normally with air or another gas surrounding the composite material thereby additonally reducing the heat conductance through the composite material according to the invention and its weight.

The embodiments, wherein compressible inorganic fiber mats cover substanially the entire surface (e.g. about 95% or more, in particular 100%) of the rigid plates between which they are located, although somewhat heavier in weight, are sometimes preferable, because they permit the manufacture of composites according to the invention of a substantial size, e.g. about 0.5 to about 3 square meter, more preferably of about 0.5 to about 2 square meter having an excellent mechanical stability even at elevated temperatures, e.g. above 300 or 500°C or even more, without danger that rigid plates separated by the fiber mats tend to get into contact with each other at such temperatures at locations where the separating fiber mat is not present as support.

Composites according to the invention wherein the compressible inorganic fiber mats cover only minor parts of the entire surface of the rigid plates between which they are located, e.g. about 20 to about 90%, for example about 40 to about 75% are, on the other hand, particularly preferable for smaller sizes of the composite, e.g. of up to about 0.5 square meter, where the danger of a deformation of the composite structure because of a mechanical strain is smaller at high temperatures.

The composite according to the invention preferably consists of more than two of the rigid plates, e.g. of 3 to 15 of these plates, preferably of 5 to 9.

The rigid plates have preferably a thickness of about 0.2 to about 5 mm, more preferably about 0.2 to about 3 mm, most preferably of about 0.2 to about 2.0 mm.

The compressible layers comprising the fiber mats between the rigid plates have preferably a thickness of about 0.3 to 5 mm in uncompressed state, i.e. when no force is applied vertically onto the plates of the composite material. The compressible layers can preferably be compressed to a thickness not going below about 0.2 mm minimum for each of these layers.

The rigid plates as well as the intermediate compressible layers can be of any thickness suitable for providing an appropriate thermal barrier between the outer sides of the composite material.

Rigid plates as well as the compressible layers of the composite material can be identical or different in thickness, as far as these different types of layers are concerned but also among one type of these layer types.

In a preferred embodiment of the composite material according to the invention one of the rigid plates (a₁) to (aₙ) or a part of these plates has a thickness which exceeds the thickness of the remaining rigid plates. These rigid plates of increased thickness can in particular form a fixture for mechanically connecting a construction element made from a composite material according to the invention with a further construction element of a device.

The rigid plate(s) of increased thickness can e.g. have a thickness of 1 to 5 mm, preferably 1.5 to 3 mm, in such a composite and the other rigid plates a thickness of 0.1 to 0.5 mm, preferably 0.15 to 0.35 mm.

The rigid plate(s) of increased thickness of such a composite material according to the invention can be (an) inner plate(s) of the composite or (an) outside plate(s).

The arrangement of rigid plates of different thickness in a composite according to the invention can furthermore be symmetric or asymmetric. By way of example, the central rigid plate of a composite material according to the present invention consisting of an odd number of rigid plates can be of increased thickness and flanked on both sides by a different or identical number of rigid plates of lower thickness. In another embodiment of the composite material according to the invention, a rigid plate of increased thickness forms one or both of the outer sides of the composite and thinner rigid plates flank the single outer plate of increased thickness on one or both sides or are located between the two rigid outside plates.

Composites according to the present invention can for example have the following structure (but are of course not limited to these structures), wherein RPxy means a rigid plate having a thickness of xy mm and CLxy means compressible layer having a thickness of xy mm in uncompressed condition:
RP2.0-CL0.5-RP1.0-CL0.5- RP2.0 ;
RP2.0-CL0.75-RP0.3-CL0.5- RP0.3 ;
RP0.3-CL0.75-RP2.0-CL0.75-RP0.3-CL0.75- RP0.3-CL0.75- RP0.3 ;
RP0.5-CL0.5-RP2.0-CL0.5-RP2.0-CL0.5- RP0.3-CL0.5- RP0.3-CL0.5- RP0.3 ;
RP0.3-CL0.5-RP0.3-CL0.5- RP0.3-CL0.5-RP2.0-CL0.5-RP0.3-CL0.5- RP0.3-CL0.5- RP0.3 ;
RP0.3-CL0.5-RP0.3-CL0.5- RP0.3-CL0.5-RP0.3-CL0.5-RP0.3-CL0.5- RP0.3-CL0.5- RP0.3-CL0.5-RP0.3 ;
and so on.

The composites of the present invention can have every size, for example from about 0.01 to about 10 square meters, preferably from about 0.02 to about 3 square meters, more preferably from about 0.02 to about 2 square meters.

The entire composites according to the present invention can preferably be compressed to less than about 85%, preferably to about 80% to about 50%, more preferably to about 75% to 60% of their thickness in uncompressed state.

As indicated above, the composite material according to the invention shall provide a thermal barrier, preferably a thermal barrier element as a construction element of the housing of an electrical battery or a thermal barrier element inside such a battery which can prevent that an overheating inside of the battery housing can damage the outer environment of said battery housing or the interior of a compartment inside of the battery housing which is separated by a sheet or wall consisting of a composite material according to the invention from another compartment wherein an overheating occurs.

The required thermal barrier effect to be provided by a composite material according to the invention depends on the temperature possibly generated on one side of the composite material in case of an overheating event occurring there and the temperature sensitivity of the environment on the opposite side of the composite material and can substantially be adjusted by a person of ordinary skill by choosing an appropriate combination of the number and thickness of the rigid plates of the composite material as well as the number and thickness of the compressible intermediate layers.

To determine the thermal barrier effect one can e.g. heat a piece of a respective composite from one side to a predefined temperature, e.g. 500°C, with a heating device such as e.g. a hot-air blower and measure the temperature on said side of the composite at one or more places as well as the temperture on the other side of the composite achieved after a pre-defined time period of exposure of the composite to the heat source, e.g. 10 to 30 min.

Preferred is a composite material according to the present invention wherein the temperature measurable at the side facing away from the heat source does not exceed about 150°C, preferably 120°C, when the side of the composite facing towards the heat source is exposed for 10 min or even more to a heat effecting a temperature of 500°C at said surface of the composite.

A further subject of the present invention is the use of a composite material as described above as a construction element of the housing of a battery or a thermal barrier element in a battery comprising a plurality of single battery cells or of packs of battery cells for separating said single battery cells or packs of battery cells thermally from one another.

Preferably, said use prevents that a runaway event occuring in one or more battery cell or packs of battery cells of one part of the battery does not cause damage of battery cells or packs in parts of said battery which are separated by the composite material according to the invention from the part of the battery, wherein the runaway event occurs.

In a further aspect, the invention therefore concerns a battery, in particular a lithium-ion battery, comprising a plurality of single battery cells or of packs of battery cells and a housing wherein the cells or cell packs are preferably be fixed e.g. by one or more brackets or by sealing compound to keep them on place inside of the housing, which housing is at least partially constructed using a composite material as described above.

A specific embodiment of such a battery comprises one or more separating elements inside its housing separating the battery housing into two or, preferably, more than two compartments, each of which comprises a part of the battery cells or packs of battery cells of the battery, wherein one or more of the separating elements consist of a composite material according to the present invention. It is still within the scope of the present invention when not all thermal barrier elements comprised in the battery consist of composites according to the invention and when a part of the barrier elements are conventional barrier elements as described e.g. in US 2006/0164795 or US 8,541,126. Particularly preferred however are batteries, wherein all separating elements consist of a composite material according to the present invention.

The separating elements can, on one hand, be sheets of a composite material according to the invention which are loosely laid into the battery housing thereby separating e.g. stacked layers of battery cells from one another. These sheets must not necessarily be fixed to the housing as long as they substantially separate one layer of battery cells or packs of battery cells of the battery thermally from the adjacent layer.

Preferably, however, the separating elements according to the invention are fixed to one another or to the housing of the battery or to both. By way of example, the separating element(s) can consist of a composite material according to the invention, which comprises one rigid plate having a thickness which exceeds the thickness of the remaining rigid plates of said composite material such as a composite material comprising 3 or preferably more rigid plates wherein the thickness of an inner plate exceeds the thickess of the remaining rigid plates, and the separating element(s) are fixed to the housing of the battery via the rigid plate of increased thickness in a way that the composite can still be compressed if necessary because e.g. the pressure in one compartment increases as a consequence of gas released by one or more of defect battery cells present in said compartment due to an overheating inside of said compartment.

As already indicated above, the composite material according to the present invention can also be used for the construction of the battery housing or parts thereof, for example for the construction of an opening cover of a battery housing comprising a cover plate and optional fittings wherein the cover plate consists of a composite material according to the present invention.

### Example:

A composite according to the invention comprising 8 rigid layers of the type vonRoll^{®} Shield T EV18 (from vonRoll) having a thickness of 0.3 mm and 7 compressible layers each of which is located between two of said rigid layers and has a thickness of 0.5 mm and consists of a ceramic mat made from ceramic fiber paper of a thickness of 0.5 mm available from KT Refractories which covers about 100% of the surface of the adjacent vonRoll^{®} Shield T EV18 plates which was fixed to the vonRoll^{®} Shield plates using SilGrip^{®} PSA5010 (from Momentive) as silicone adhesive.

A specimen of 150 mm x 150 mm of said composite was fixed to a carrier and was heated with a hot-air blower (Hotwind^{®} from Leister) having a nozzle of 60 mm in diameter from one side for 990 seconds. The temperature at the surface of composite facing the hot-air blower was measured with thermoelements at two positions T1 and T2 having a distance of 20 mm from each other and being located in the center of the stream of hot air provided by the hot-air blower. Two further thermoelements measured the temperature at the surface of the composite located opposite to the hot-air blower at a position T3 located on said surface directly opposite to point T1 and at a second location T4 having a distance of 50 mm from T3

The composite sample reached a medium temperature of 500°C at the surface facing the hot-air burner (position T1/T2) within about 1 min. A medium surface temperature of 120°C was obtained at position T3 after 8 min, a medium surface temperature of 125°C after 10 min and remained constant until 16.5 min after start of the test, so that the test was terminated at this point.

## Claims

1. A compressible composite material in form of a layered assembly of substantially rigid plates and compressible layers, which are alternately piled in direction vertical to their largest surface comprising
n of said rigid plates (a₁), (a₂),....(a(ₙ₋₁) and (aₙ) having a substantially identical largest surface area and comprising a ceramic material having a thermal conductivity of less than about 35 W/mK at 25°C and a thermally resistant resin as binder; and
(n-1) of said compressible layers which are located between two adjacent ones of said plates (a₁) to (aₙ) and comprise an elastic ceramic or refractory fiber mat, which is cemented to said adjacent plates by virtue of a thermally resistant resin and fill the space between said adjacent plates in a way which enables said fiber mat to maintain a permanent interstice between two adjacent plates (a₁) and (a₂), (a₂) and (a₃),......and (a₍ₙ₋₁₎ and aₙ,
wherein n represents an integer of 2 or more than 2.

2. The composite material according to claim 1, wherein the rigid plates comprises about 80 or more percent based on the weight of the plate of mica as the ceramic material, preferably about 85 to about 95 percent.

3. The composite material according to claim 1 or 2, wherein the compressible inorganic fiber mat consists of fibers substantially consisting of alumina (Al₂O₃), silica (SiO₂) and zirconia (ZrO₂) and mixtures thereof, in particular mixtures of alumina and silica.

4. The composite material according to any one of claims 1 or 3, wherein the thermally resistant binders are preceramic silicone resins.

5. The composite material according to any one of claims 1 or 4, wherein one or more, preferably all compressible inorganic fiber mats, cover about 95% or more, preferably 100%, of the surface of the rigid plates between which they are located.

6. The composite material according to any one of claims 1 or 4, wherein one or more, preferably all compressible inorganic fiber mats, cover about 20 to about 90%, in particular about 40 to about 75% of the surface of the rigid plates between which they are located.

7. The composite material according to any one of claims 1 or 6, wherein said rigid plates (a₁) to (aₙ) have a thickness of about 0.2 to about 5 mm, preferably about 0.2 to about 3 mm, more preferably about 0.2 to about 2.5 mm.

8. The composite material according to any one of claims 1 or 7, wherein the layers comprising the compressible inorganic fiber mats have a thickness of about 0.3 to 5 mm in uncompressed state.

9. The composite material according to any one of claims 1 or 8, wherein the compressible inorganic fiber mats can be compressed to about 30 percent of their thickness in uncompressed state.

10. The composite material according to any one of claims 1 or 9, wherein the layers comprising the compressible inorganic fiber mats can be compressed to a thickness of about 0.2 mm minimum.

11. The composite material according to any one of claims 1 or 10, wherein n represents an integer of 3 to 15, preferably 5 to 9.

12. The composite material according to any one of claims 1 to 11, wherein one or a part of said rigid plates (a₁) to (aₙ) have a thickness which exceeds the thickness of the remaining rigid plates.

13. The composite material according to claim 12, wherein one of the inner rigid plates of the assembly, in particular the central plate in case of an odd number of rigid plates present in the assembly, has a thickness which exceeds the thickness of the remaining rigid plates.

14. The composite material according to claim 12, wherein at least one rigid plate located at the outside of the assembly has a thickness which exceeds the thickness of the remaining rigid plates.

15. The composite material according to any one of claims 12 to 14, wherein the rigid plate(s) exceeding the other in thickness has a thickness of 1 to 5 mm, preferably 1.5 to 3 mm, and the others have a thickness of 0.1 to 0.5 mm, preferably 0.15 to 0.35 mm.

16. The composite material according to any one of claims 1 to 15, wherein the features referred to in claims 1 to 15 are selected such that the temperature measurable within a time period of 10 min at one of the outer sides of the assembly does not exceed about 150°C, preferably 120°C, when the outer side of the assembly located opposite to said other outer side is exposed to a temperature of 500°C during said entire time period.

17. The use of a composite material according to any one of claims 1 to 16 as a construction element of the housing of a battery or a thermal barrier element in a battery comprising a plurality of single battery cells or of packs of battery cells for separating said single battery cells or packs of battery cells thermally from one another.

18. The use according to claim 17, wherein a runaway event occuring in one or more battery cell or packs of battery cells of one part of the battery does not cause damage of battery cells or packs in parts of said battery which are separated by the composite material according to any one of claims 1 to 15 from the part of the battery, wherein the runaway event occurs.

19. A battery comprising a plurality of single battery cells or of packs of battery cells and a housing for the cells or cell packs which is at least partially constructed using a composite material according to any one of claims 1 to 16.

20. A battery according to claim 19, comprising one or more separating elements inside said housing separating the battery into two or more compartments, each of them comprising a part of the battery cells or packs of battery cells of the battery, wherein at least one of the separating walls consists of a composite material according to any one of claims 1 to 16.

21. A battery according to claim 20, wherein all separating elements consist of a composite material according to any one of claims 1 to 16.

22. A battery according to any one of claim 20 or 21, wherein the separating elements are fixed to one another or to the housing of the battery or to both.

23. A battery according to any one of claims 20 to 21, wherein the separating element(s) consist of a composite material according to claim 12 which comprises one rigid plate having a thickness which exceeds the thickness of the remaining rigid plates of said composite material, preferably a composite material comprising 3 or more rigid plates wherein the thickness of an inner plate exceeds the thickess of the remaining rigid plates, and the separating element(s) are fixed to the housing of the battery via the rigid plate of increased thickness.

24. A battery according to any one of claims 19 to 23, wherein the housing comprises an opening cover comprising a cover plate and optional fittings which cover plate consists of a composite material according to any one of claims 1 to 16.

25. A battery according to any one of claims 19 to 24, which is a lithium-ion battery.
